(19)

Europäisches
Patentamt
European
Patent Office
Office européen
des brevets

(11) **EP 4 418 597 A1**

(12) **EUROPEAN PATENT APPLICATION**

(43) Date of publication:
**21.08.2024 Bulletin 2024/34**

(21) Application number: **24158687.4**

(22) Date of filing: **20.02.2024**

(51) International Patent Classification (IPC):
*H04L 5/00* $^{(2006.01)}$    *H04B 10/25* $^{(2013.01)}$
*H04B 10/516* $^{(2013.01)}$    *H04J 14/02* $^{(2006.01)}$
*H04L 1/00* $^{(2006.01)}$    *H04L 27/26* $^{(2006.01)}$

(52) Cooperative Patent Classification (CPC):
**H04L 5/0046; H04B 10/25; H04B 10/5161;
H04J 14/0298; H04L 1/0003; H04L 1/0009;
H04L 1/0017; H04L 5/006;** H04L 5/0007;
H04L 27/2697

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.02.2023 US 202363446954 P**

(71) Applicant: **Nokia Solutions and Networks Oy
02610 Espoo (FI)**

(72) Inventor: **Che, Di
Union, 07083 (US)**

(74) Representative: **IP HILLS NV
Bellevue 5/501
9050 Gent-Ledeberg (BE)**

(54) **METHOD AND APPARATUS OF POINT-TO-MULTIPOINT TRANSMISSION IN AN OFDM NETWORK**

(57)    A method and apparatus for processing of signals in a point-to-multipoint (P2MP) network are provided. The processing includes obtaining link conditions, in a spectrum comprising multiple OFDM subcarriers, of a plurality of users at respective user nodes that are in communication with a central node of the network. The processing further includes inputting the link conditions to an entropy loading (EL) algorithm, thereby to determine a modulation format for each of the OFDM subcarriers; optimizing an allocation of OFDM subcarriers to users according to an OFDMA scheme; and for each user, loading data from a bitstream onto the allocated OFDM subcarriers in the respective determined modulation formats.

FIG. 1

## Description

## Technical Field

The present disclosure relates to optical fiber communication, and more particularly to methods and apparatus for distributing OFDM signals to multiple downstream users in a passive optical network.

## Background

A passive optical network (PON) is a variety of fiber optic access network that uses a point-to-multipoint (P2MP) topology to deliver network access to end users. Typically, downstream transmissions are broadcast from an optical line terminal (OLT) at a central hub to plural optical network units (ONUs) or optical network terminals (ONTs) situated near the end users. Passive components such as fiber optic splitters distribute the downstream transmissions among the ONUs or ONTs. Upstream signals are typically combined using time-division multiple access (TDMA) or another suitable multiple access protocol.

One modulation scheme that has been favored for PON is intensity-modulation direct-detection (IM-DD). In IM-DD, the radio-frequency data signal modulates the intensity of an optical carrier. For demodulation, the optical carrier is directly detected and converted to the electrical domain by a photodetector.

Network planners have predicted a growing diversity in the types of users that a future P2MP will need to support, including diversity in rate demand and diversity in link quality. Such predictions militate for P2MP networks, including P2MP IM-DD networks, with enhanced flexibility.

## Summary

Current PON networks generally provide fixed aggregated bitrates imposed by the worst-case user in the network, irrespective of user diversity. As a consequence, network capacity may be underutilized, particularly when there is great diversity among the users. To address this problem, designers have proposed adding rate adaptation to existing PON designs. For example, R. van der Linden et al., "Increasing flexibility and capacity in real PON deployments by using 2/4/8-PAM formats," Journal of Optical Communications and Networking, vol. 9, no. 1, pp. A1-A8, (2017), have proposed to support multiple formats like PAM-2/4/8 with a coarse rate granularity. The abrupt rate cliff between two different formats can be shrunk by flexible rate forward error correction (FEC) codes and probabilistic shaping (PS).

Orthogonal Frequency Division Multiplexing (OFDM) is a type of digital transmission in which an incoming bitstream is divided among a multiplicity of closely spaced orthogonal subcarriers. Each subcarrier is modulated with selected bits from the incoming bitstream. The subcarrier signals, which typically have overlapping spectra, are transmitted in parallel. Cyclic prefixes can be added to transmitted symbols, to suppress intersymbol interference and to facilitate frequency-domain processing.

OFDM offers the potential for relatively high flexibility. It also offers the opportunity for adaptive bit loading (BL), which is a known technique for increasing the achievable data rate toward the bandwidth-limited channel capacity. In BL, the signal-to-noise ratio (SNR) of a given subcarrier determines how many bits are assigned to it.

In a P2MP network, OFDM can serve multiple users by time division multiplexing (TDM) among users, with each user fully occupying the available spectrum, i.e., the full range of available subcarriers. In other approaches, flexibility can be enhanced by dividing the spectrum among users according to a scheme of orthogonal frequency division multiple access (OFDMA).

Information theory predicts that a favorable capacity-approaching strategy for bandwidth-limited channels is the well-known water-filling strategy, supported by multicarrier (MC) modulation to decompose high-speed signals to series of low-symbol-rate subcarriers (as in OFDM), and to adapt their modulations based on the SNR response. BL is one example of an algorithm that approximates water filling. BL assigns various discrete bit levels to subcarriers.

EL is another example of an algorithm that approximates water filling. EL is discussed, for example, in D. Che et al, "Approaching the capacity of colored-SNR optical channels by multicarrier entropy loading," J. Lightwave Technol. 36(1), 68-78 (2018).

In BL, rate adaptation can be applied only in whole increments of the entropy, as, for example, in the series of modulation formats QAM-4, QAM-8, QAM-16, etc. By contrast, EL loads continuous entropies, rather than discrete bit levels, to the subcarriers. As a practical matter, this means that entropy can be loaded with relatively high resolution, or in other words, with small granularity.

The small granularity for entropy has an important consequence. Total data rate is the product of entropy times bandwidth. Hence, for a given degree of rate adaptation, reducing the granularity for entropy permits the frequency resolution, which in OFDMA is the bandwidth per subcarrier, to broaden. Because the continuous adjustment of entropy relaxes the frequency granularity, EL has the predicted advantage that it could outperform BL in a network with relatively few subcarriers.

Disclosed herein is a new, OFDMA-based technique of downstream P2MP transmission that uses entropy loading (EL) for enhanced flexibility among diverse users.

In embodiments, our new technique also employs subcarrier grouping (SCG). Under SCG, respective groups of subcarriers are assigned to individual users, and each subcarrier group is modulated with a single modulation format.

A discussion of SCG appears in Z. Liu et al., "Linear constellation precoding for OFDM with maximum multipath diversity and coding gains," IEEE Transactions on Communications, vol. 51, no. 3, pp. 416-427, (2003), where it was proposed to simplify OFDMA-BL as specified, for example, in the DOCSIS 3.1 and Wi-Fi 6 standards. User grouping is discussed in R. Borkowski et al., "FLCS- PON-an opportunistic 100 Gbit/s flexible PON prototype with probabilistic shaping and soft-input FEC: operator trial and ODN case studies," Journal of Optical Communications and Networking, vol. 14, no. 6, pp. C82-C91, (2022), for flexible rate passive optical networks (FLCS-PON).

However, our new approach, in which SCG is combined with EL, offers a novel benefit: As noted above, the fractional entropy granularity of EL significantly relaxes the frequency resolution. This enables significantly more SCs to be grouped together without suffering a substantial rate penalty. This, in turn, can greatly simplify the per-SC based OFDM-EL. In particular, it can make it practical to assign only a single format per group for an OFDMA user, which would make OFDMA more attractive than OFDM-TDM for end users. Building on this benefit, a further benefit is that OFDMA achieves multiuser diversity gain that can enable a network to support outlying users with extremely bad link quality, thus extending the network coverage.

It should be understood that the principles described here are applicable not only to PON, but to other network architectures as well. In particular, they have broad application to P2MP networks of all kinds, including DOCSIS, Wi-Fi, and 5G/76G cellular networks. It should also be understood that although the exemplary embodiment described below is designed for downstream transmission, these principles have application for upstream transmission as well. In particular, there are applications for wireless networks, which are free of the difficulties with optical beat interference that are encountered with upstream transmission in optical P2MP networks. Accordingly, both upstream and downstream transmission in a broad variety of P2MP networks should be understood as falling within the scope of the present disclosure.

Accordingly, the disclosure relates in a first aspect to a method in which are obtained the link conditions of a plurality of users at respective user nodes of a point-to-multipoint (P2MP) network that are in communication with a central node of the P2MP network. For each user, the link condition is determined for each subcarrier in a spectrum comprising multiple OFDM subcarriers. Further according to the method, the link conditions are input to an entropy loading (EL) algorithm, thereby to determine a modulation format for each of the OFDM subcarriers. The method optimizes an allocation of OFDM subcarriers to users according to an OFDMA scheme and, for each user, loads data from a bitstream onto the allocated OFDM subcarriers in the respective determined modulation formats.

The P2MP network may, e.g., be a PON, and the loading of the data for each user may, e.g., comprise optical OFDM modulation.

In embodiments, the method further comprises transmitting the loaded data in parallel, between the user nodes and the central node, on the OFDM subcarriers. The loaded data may, for example, be transmitted in parallel from the central node to the user nodes.

In some embodiments, the optimizing an allocation of OFDM subcarriers may comprise maximizing a data rate. In other embodiments, the optimizing may comprise minimizing a bit error rate.

In some embodiments, the optimizing an allocation of OFDM subchannels to users comprises grouping at least some of the subcarriers into one or more SC groups and allocating each SC group to a respective user. In some such embodiments, the EL algorithm provides, as output, a signal entropy and a net bit rate for each subcarrier under the link condition of each user, and the grouping of subcarriers comprises:

Selecting a user $m$; from a set of available subcarriers, sorting the subcarriers in descending order of their net bit rates based on the link condition of user $m$; taking subcarriers in the sorted order from highest to lowest rate and binning them until their collective net bit rate reaches or exceeds a bit-rate target for user $m$; designating the binned subcarriers as subcarrier group $m$; removing the subcarriers of subcarrier group $m$ from the set of available subcarriers; and repeating the selecting, sorting, taking, designating, and removing steps for respective new users $m$ until a condition for terminating is reached.

In embodiments, the grouping of subcarriers for each user $m$ may further comprise, after the designating and removing steps:

Evaluating an average bit error rate (BER) for group $m$; if the average BER is greater than a target bit rate, adding the next subcarrier in the sorted order to group $m$; and returning to the taking step.

Some embodiments may further comprises assigning an order of priority to the users and selecting the users $m$ in the order of priority. Priority may be awarded, for example, based on the link condition of each user, with highest priority awarded to worst link condition. In some embodiments, priority may be awarded based on a total achievable data rate for each user. The total achievable data rate for each user is evaluated, e.g., by summing the subcarrier-dependent net bit rate for that user over all subcarriers in the spectrum.

In embodiments, the bitstream is encoded with a forward error-correcting code (FEC) before loading data from the bitstream onto the allocated OFDM subcarriers. In some embodiments, the FEC is a hard decision code, and the optimizing an allocation of OFDM subcarriers to users is performed so as to minimize a bit error rate. In other embodiments, the FEC is a soft-decision code, and the optimizing an allocation of OFDM subcarriers to users is performed so as to maximize a normalized generalized mutual information (*nGMI*).

In a second aspect, the disclosure relates to apparatus for processing of a bitstream for transmission in a point-to-multipoint (P2MP) network. The apparatus may comprise circuitry configured for performing any of the various operations listed above. The apparatus may be comprised within a digital signal processor (DSP). In embodiments, the apparatus may be comprised within an optical line terminal (OLT) of a passive optical network (PON). Within the apparatus, circuitry configured for loading of the data may comprise at least one optical OFDM modulator.

**Brief Description of the Drawings**

FIG. 1 is a simplified schematic drawing, illustrating the concept of a point-to-multipoint (P2MP) network with the non-limiting example of a P2MP optical network such as a passive optical network (PON).

FIG. 2 is a simplified, functional block diagram of an example apparatus for signal modulation, within a transmitter device of a P2MP optical network.

FIG. 3 is a simplified, functional block diagram of an OFDM modulator of the kind that could be used, e.g., in a P2MP network.

FIG. 4 is flowchart of a procedure that may be used, according to herein described principles, for grouping OFDM subcarriers for P2MP transmission.

FIG. 5 is a flowchart of a procedure that may be used, in conjunction with the procedure of FIG. 4, for rate maximization.

FIG. 6 is a flowchart of a procedure that may be used, in conjunction with the procedure of FIG. 4, for ordering of users.

FIG. 7 is an experimentally determined graph of *hGMI* versus BER, comparing the results from several different schemes for loading and modulation, including the EL-SCG scheme described herein.

FIG. 8 is an experimentally determined graph, comparing *hGMI* obtained for EL-SCG with *hGMI* obtained for entropy loading (EL) at a fixed bit error rate (BEL) of 0.01. The graph shows the gap between EL-SCG and EL, as a function of the number of subcarrier groups determined with EL-SCG.

FIG. 9 is a graph showing a profile of signal-to-noise ratio (SNR) versus frequency that was used for modeling studies.

FIG. 10 is a graph, determined from modeling studies, that illustrates the sensitivity of *hGMI* to chromatic dispersion. The graph compares OFDMA to time-division multiplexing (TDM) for multi-user access.

FIG. 11 is a graph, determined from modeling studies, that illustrates the sensitivity of *hGMI* to SNR. The graph compares OFDMA to time-division multiplexing (TDM) for multi-user access.

**Detailed Description**

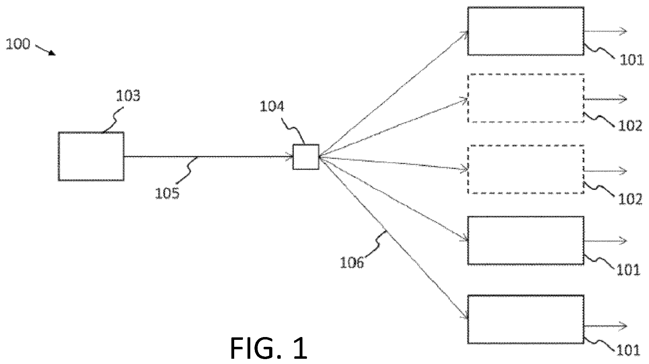

FIG. 1 illustrates a point-to-multipoint (P2MP) network **100**. By way of illustration but not of limitation, the illustrated network is an optical network such as a passive optical network (PON), in which an optical signal may be transmitted through fiber connections **105**, **106**. The network **100** comprises an optical line termination (OLT) **103** placed at the server provider's central office, and multiple optical network units (ONUs) **101**, **102**. An unpowered optical splitter **104** allows to distribute input received from the OLT **103** toward the connected ONUs **101**, **102**. The figure illustrates that a single optical fiber **105** serves multiple endpoints **101**, **102**, such that one optical signal is broadcast to every connected endpoint **101**, **102**.

In FIG. 1, two different types of receivers **101**, **102** are indicated as being present in the network **100**. This is to illustrate that the same P2MP network may support a variety of different user types, with different rate demands and different levels of link quality.

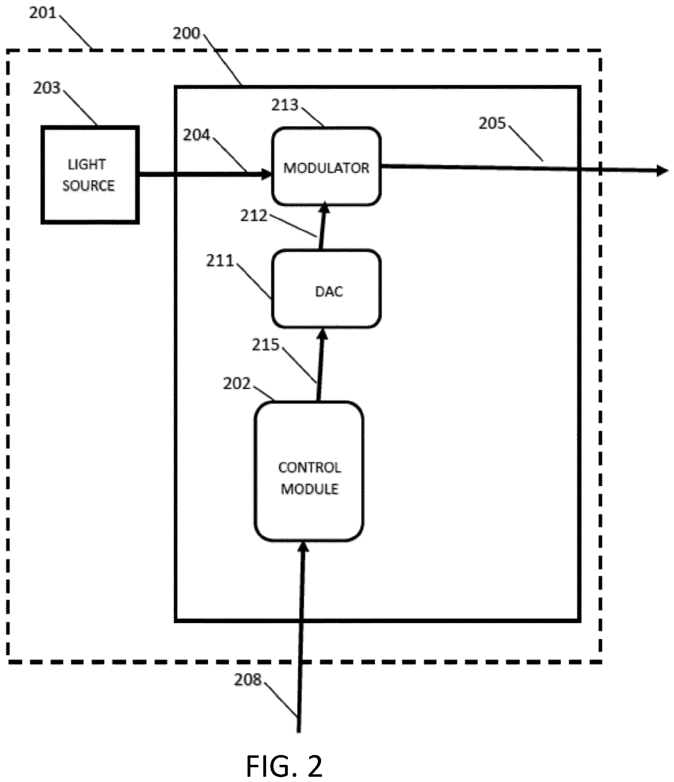

FIG. 2 gives a highly simplified functional block scheme of an example embodiment of an apparatus **200** for optical signal modulation. The apparatus **200** is comprised in a transmitter device **201**. For example, the transmitter device **201** may be comprised in an optical line terminal (OLT) such as OLT **103** of FIG. 1.

The transmitter device is adapted to transmit a modulated optical signal **205** toward the end-user side. The apparatus **200** is configured to modulate a single-wavelength carrier wave **204**, and comprises a first module **201** and a second module **202**. The apparatus **200** receives the carrier wave **204** from a light source **203**, e.g., a laser source. The apparatus **200** is configured to modulate one or more carrier waves **204** by means of one or more modules **202**.

The apparatus is configured to receive digital data **208**. The apparatus **200** may further comprise one or more digital-to-analog converters (DACs) **211** to convert digital control data **215** generated by module or modules **202** into electrical signals **212**, that are used to control a modulator **213**.

The modulator **213** comprises optoelectronic componentry for modulating optical intensity, optical phase, and/or optical polarization, and it comprises circuitry configured to perform the signal processing and control necessary to produce the modulated optical signal. The signal processing is typically carried out by circuitry in a suitably configured digital signal processor (DSP).

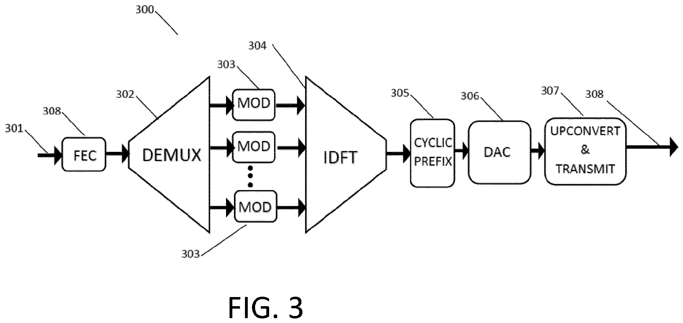

FIG. 3 is a highly simplified, functional block diagram of an OFDM modulator **300** of the kind that could be used, e.g., in a P2MP network. As shown in the figure, a forward error-correcting code (FEC) **308** is applied to in input bitstream **301**, after which demultiplexer **302** distributes the bitstream into multiple substreams that are mapped to constellation symbols in respective modulator elements **303** and recombined into a single output stream by inverse discrete Fourier transform (IDFT) module **304**.

The entropy loading operation described below would typically be carried out in the modulator elements **303**, which would typically be implemented in one or more suitably configured DSPs.

Turning back to FIG. 3, cyclic prefixes are added to the IDFT output at module **305**, according to known practices in OFDM modulation. The digital output stream from module **305** is converted to an analog output stream at DAC **306**, and it is conditioned for transmission at element **307**. The conditioning at element **307** may, in implementations, include upconversion to a desired frequency for transmission. After suitable conditioning, the signal is transmitted as transmitted signal **308**.

As noted above, entropy loading (EL) may be included in the generation of modulated signals in the respective sub-channels, i.e., on the respective OFDM subcarriers. According to our new technique, subcarrier grouping (SCG) is performed in conjunction with entropy loading. Accordingly, we refer to our new technique as EL-SCG.

The entropy loading is implemented using prior knowledge of the link conditions of all of the users. This knowledge may be acquired, for example, by sending probe signals to acquire the SNR map across the spectrum.

Briefly, EL is a function to determine the modulation format of each subcarrier, given a loading target such as bit error rate (BER) and a measure of the SC quality, such as signal-to-noise ratio (SNR). By contrast, EL-SCG is a procedure that relies on EL. Its goal is to assign subcarriers to multiple users in a manner that is optimal according to some criterion, such as maximizing the data rate. In operation, EL-SCG utilizes the basic EL algorithm to determine the modulation format.

For optimization, two alternative targets are of interest. Given a fixed performance threshold such as BER, a suitable objective would be to maximize the data rate, as in the example provided below. On the other hand, given a fixed user rate demand, a suitable objective would be to optimize the performance, exemplarily by minimizing the BER. Similar techniques can be used to achieve either objective.

An example embodiment uses bit error rate (BER) as the loading target. This choice is consistent with hard decision forward error correction (HD-FEC) coding, which is typical in IM-DD networks. For system metrics, the example embodiment uses both BER and generalized mutual information under binary HD decoding (hGMI). The *hGMI* is defined by:

$$hGMI = \mathbb{H}(X) - \log_2|\mathcal{X}| \cdot \mathbb{H}_2(\epsilon),$$

where

$\mathbb{H}(X)$ is the entropy of signal $X$;

$\mathbb{H}_2(\cdot)$ is the binary entropy function;

$\varepsilon$ is the bit error probability; and

$|X|$ is the size of the modulation alphabet.

Using a binary HD-FEC code of rate $c$, the net bit rate $\mathbb{R}$ is calculated as

$$\mathbb{R} = \mathbb{H}(X) - \log_2|\mathcal{X}| \cdot (1 - c).$$

The rate $\mathbb{R}$ has *hGMI* as an upper bound. $\mathbb{R}$ is equal to *hGMI* for an ideal HD-FEC that corrects $\varepsilon$ with

$$c = 1 - \mathbb{H}_2(\epsilon)$$

.

In the example embodiment, EL-SCG is implemented with the following *Algorithm EL-SCG*, which is suitable either for users with identical link conditions or for users with multiple link conditions. The EL-SCG algorithm includes a pre-loading step that uses an EL algorithm.

As known in the art, EL effectuates a continuous entropy adjustment by probabilistic constellation shaping (PCS), which assigns different probabilities to different constellation points. Although the size of the modulation alphabet is integral, the adjustment of probabilities makes possible a continuous ajustment of the entropy $\mathbb{H}$.

Given the subcarrier quality (as characterized, e.g., by SNR), and given a loading target such as BER, there will be a probabilistically-shaped modulation format, with an entropy $\mathbb{H}$, that exactly matches the loading target under the given SNR. The pre-loading step maps the subcarrier quality and loading target to a modulation format, as characterized by entropy $\mathbb{H}$. Given the FEC overhead, the rate $\mathbb{R}$ is calculated from the entropy $\mathbb{H}$.

For applications to PON, cable access, or other types of fixed network, embodiments of our technique would be useful, e.g., for network recalibration at intervals on the scale of weeks or months, although shorter or longer intervals are not excluded. For networks with less link stability, such as wireless networks, shorter intervals could be desirable. In some cases, it could be desirable to repeat the procedure for acquisition of channel information each time a central office, e.g., sends information to a user.

An example EL algorithm suitable for the purpose of pre-loading is provided in D. Che et al., "Squeezing out the last few bits from band-limited channels with entropy loading," Optics Express, vol. 27, no. 7, pp. 9321-9329, (2019), the entirety of which is hereby incorporated herein by reference. In Che et al., a look-up table is used. The look-up table is acquired by Monte-Carlo simulations with AWGN channels, using an SNR map acquired, e.g., with probe signals. The look-up table stores the relations between *hGMI* and channel SNR for all the available modulation formats. It is noteworthy in this regard that, as noted above, the entropy *H* takes continuous values for EL.

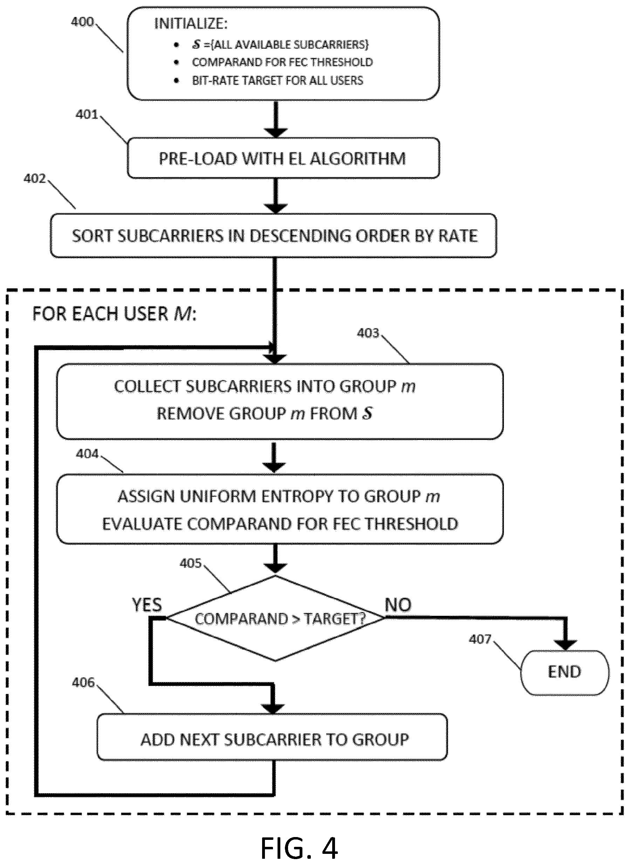

An example implementation of our technique, which is here referred to as Algorithm EL-SCG, will now be described with reference to FIG. 4.

### *Algorithm EL-SCG*

Initialize (block **400**):

*Initialize* the set $\mathcal{S}$ as the "spectrum", i.e., as the set of all available SCs.

*Initialize* a target, here denominated the "FEC Threshold" for the forward error-correction code. If the FEC code is hard decision, the bit error rate (BER) is a suitable target. If the FEC code is soft decision, normalized generalized mutual information (*nGMI*) is a suitable target.

*Initialize* bit-rate target $\mathbb{R}(m)$ for each user *m, m*=1,2,...,*M.*

(1) Perform pre-loading (block **401**) with an EL algorithm, to determine $\mathbb{H}$ and $\mathbb{R}$ for each subchannel and for the link condition of each user.

This step provides a table, or the equivalent, that may be regarded as listing, for each subchannel, every user's $\mathbb{H}$ and $\mathbb{R}$ based on the underlying condition of that user's link. Alternatively, the table or equivalent may be regarded as listing for each user, every subchannel's $\mathbb{H}$ and $\mathbb{R}$.

(2) Sort (block **402**) the SCs in $\mathcal{S}$ by a descending order based on their R in the underlying link condition. Do this for the link condition of each user *m*. For *m*=1,2,...,*M*, perform for user *m:*

(3) Collect (block **403**) subcarriers into Group *m*: Group the SCs in the sorted order from highest to lowest rate until their collective bit-rate reaches or exceeds $\mathbb{R}(m)$. Denominate these SCs as Group *m,* and denominate the number of SCs in Group *m* as *N(m)*. Remove Group *m* from $\mathcal{S}$.

(4) Assign (block **404**) a uniform entropy H(m) to Group *m* according to:

$$\mathbb{H}(m) = \mathbb{R}(m)/N(m) + \log2|\mathcal{X}(m)| \cdot (1 - c),$$

and then evaluate the average BER (for hard-decision FEC, for example), the *nGMI* (for soft-decision FEC, for example), or other suitable comparand, i.e., other suitable measure to be compared against the FEC target.

(5) Compare (block **405**) the comparand to the FEC target. If the comparison fails, for example if the comparand is average BER and, as shown in the figure, it is larger than the target, add (block **406**) the next SC in the sorted order to Group *m* and return to Step (3).

### *End*

The SC sort in step (2) aims to minimize the SNR difference within a group to avoid an extra power loading. Although an iteration is evidently possible between Steps (3) and (5), it is expected to be rare in practice, because the rate gap between EL-SCG and EL is expected to be very small.

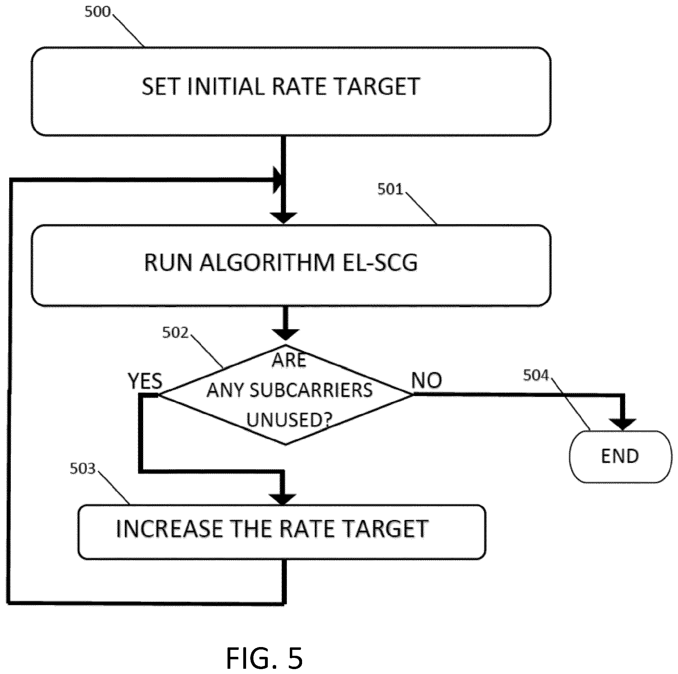

FIG. 5 is a flowchart of an example procedure for maximizing the total data rate that is achieved. At block **500**, an initial rate target is set for, e.g., all OFDMA users. At block **501**, Algorithm EL-SCG is run. After Algorithm EL-SCG has run, the procedure checks, at block **502**, whether there are any remaining, unused subcarriers. If there are none, the procedure terminates (block **504**). If there are remaining, unused subcarriers, the procedure increases the rate target (block **503**) and returns to block **501** to run Algorithm EL-SCG a further time. Thus, the rate target is increased until no further subcarriers are available.

In scenarios in which all the users have the same link condition, it does not matter whose SCs are assigned first. The SCG order, i.e., the numbering of respective users as *m*=1, *m*=2, etc., does matter, however, for a P2MP network with multiuser diversity. There, the aggregated multiuser capacity depends on how priorities are assigned to respective users, because once an SC is assigned to one user, it cannot be occupied by another user with a different link condition.

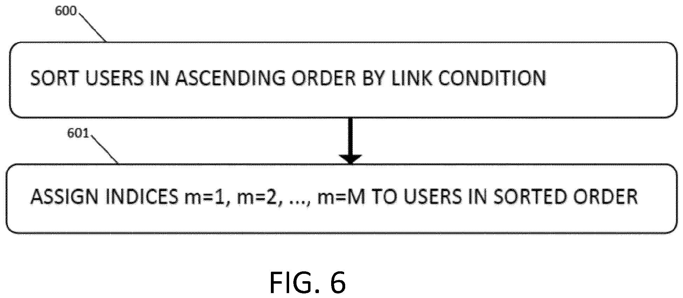

Various strategies may be used to find an SCG order. FIG. 6 is a flowchart of an example strategy. The strategy of FIG. 6 is a simple, sub-optimal user sorting strategy in which the users are sorted in ascending order based on the quality of each user's link condition, so that the worse-case users have higher priority and are assigned better SCs. The link condition for each user is evaluated, for example, as the total achievable data rate

$$\sum i \, \mathbb{R}(i)$$

, where *i* is the SC index, R(i) is dependent on the link condition for the given user, and the summation is taken over all SCs in the spectrum.

Turning to FIG. 6, the users are sorted at block **600** in ascending order by link condition. At block **601**, indices m=1, *m*=2, etc., up to *m*=M are assigned to the users in the sorted order, wherein M is the total number of users.

**Example I--Experimental**

Principles as described above were tested experimentally by observing downstream transmission in an IM-DD setup with 100-GHz end-to-end bandwidth. A1:4 optical splitter emulated multiple link conditions. Each branch consisted of a standard single-mode fiber spool (60-m step variable length) to add chromatic dispersion (CD) of 17 ps/nm/km at 1550 nm, equivalent to about 1 ps/nm every 60 m. Each branch also included a variable optical attenuator to add extra optical path loss (OPL).

The OFDM signal had a DFT size of 2048 and a SC spacing of 0.125 GHz, leading to 800 data-carrying SCs in total within 100-GHz bandwidth. Each OFDM symbol had a 16-point cyclic prefix. A PAM signal included for comparison was pulse-shaped by a 0.01 roll-off root-raised cosine (RRC) filter with a fixed 200-GBd symbol rate but variable orders (up to PAM-8) and entropies for rate adaptation. The receiver used a 1-tap per SC equalizer for OFDM and a 2048-tap equalizer for PAM, to have the same time duration for equalization.

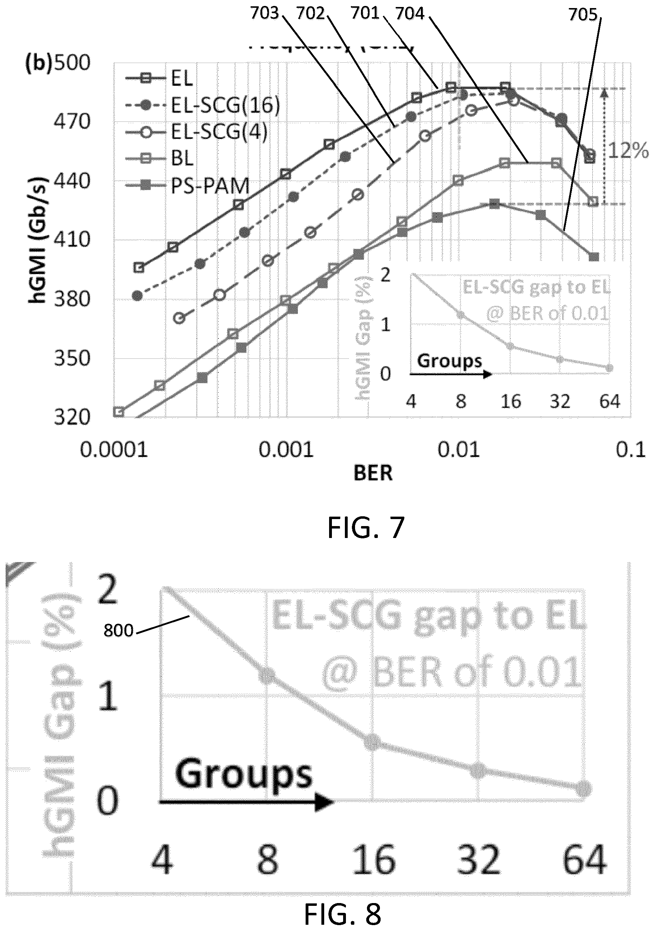

In a demonstration, we chose a link with 5-ps CD, with 8-dBm input to the photodiode, and with bandwidth limited mainly by the electronic transmitter, which produced larger noise at high frequencies, and by the frequency selective fading due to CD. FIG. 7, which is a graph of *hGMI* versus BER, compares the *hGMI* obtained for EL (top curve **701**), EL-SCG with sixteen SC groups (second curve from top **702**), EL-SCG with four SC groups (third curve from top **703**)), BL (second curve from bottom **704**), and PS-PAM (bottom curve **705**). In this comparison, the EL performance is seen to be superior to the other modulation schemes, as expected due to pulse-shaping (PS) gain and the precise adaptation of entropy per SC. EL-SCG is seen to exhibit an *hGMI* gap to EL, particularly for the smaller number of groups. However, the gap is seen to shrink rapidly at higher BER.

FIG. 8 shows, as a function of the number of SC groups, the EL-SCG gap to EL at a BER of 0.01, which is plotted as curve **800.** It is evident that the penalty for SCG is below 0.6% if the group number is 16 or more.

**Example II--Simulation**

In a P2MP IM-DD network, the link conditions are mainly diversified in CD and OPL. The diversity represented by CD is manifested as a colored SNR difference, whereas the diversity represented by OPL is manifested as a white SNR difference, i.e., as a shift that is independent of frequency. We performed simulations that separated the effects of CD from the effects of OPL. The simulations predicted that using OFDMA to divide the spectrum among users would be beneficial for both types of user diversity, with performance surpassing that of the TDM approach.

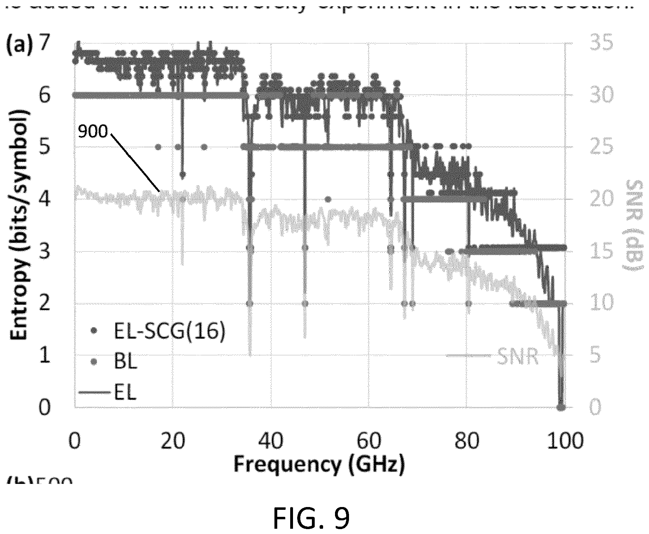

Using experimentally measured SNR profiles, the simulation evaluated the *hGMI* with a BER target of 0.01. To simplify the analysis, we assumed two clusters, containing eight users each, of users having similar link conditions. For the CD case, the reference cluster fixed its CD as 0 ps and the other varied the CD up to 10 ps; for the OPL study, the reference was the SNR profile 900 in shown in FIG. 9, and the other cluster had a white SNR reduction.

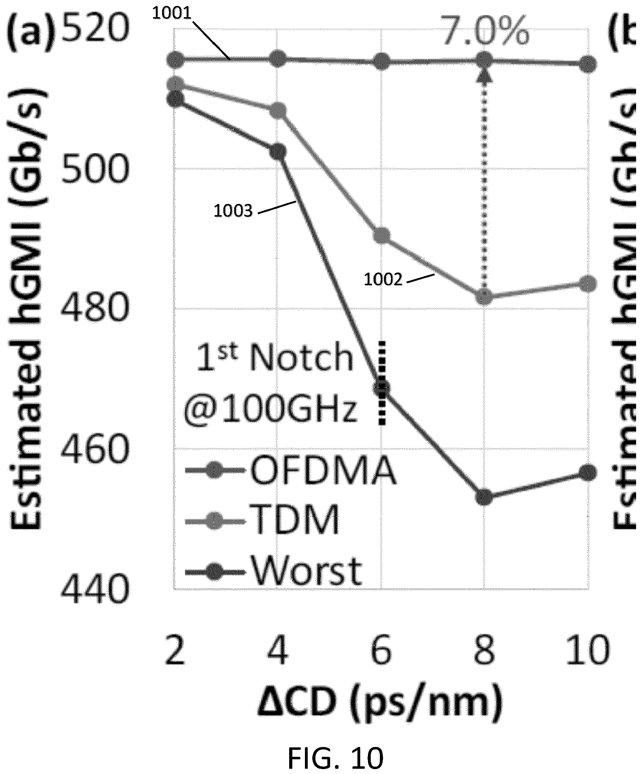

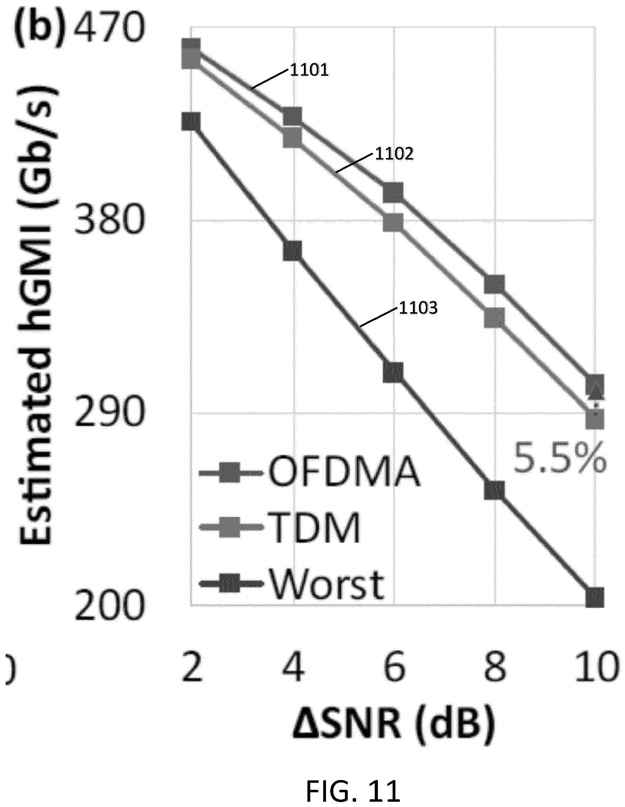

FIG. 10 is a graph of estimated *hGMI* versus the change ΔCD in the chromatic dispersion between the control and variable clusters. FIG. 11 is a graph of the estimated *hGMI* versus the change ΔSNR in the SNR between the control and variable clusters. To produce FIGS. 10 and 11, we assumed that one cluster of users has a fixed link condition CD 1, and that the other cluster of users had a variable link condition CD2. We defined ΔCD as the difference between the two link conditions, i.e., ΔCD = CD2-CD1.

In each graph, the top curve, i.e., curve **1001** in FIG. 10 and curve **1101** in FIG. 11, represents the OFDMA case, the middle curve, i.e., curve **1002** in FIG. 10 and curve **1102** in FIG. 11, represents the TDM case, and the bottom curve, i.e., curve **1003** in FIG. 10 and curve **1103** in FIG. 11, represents the case wherein all users operate at the worst-case link condition.

The superior performance of OFDMA in FIG. 10 can be explained by avoidance of CD degradations, because in OFDMA, bad users with fading get the priority to occupy good SCs which are not affected by fading. The superior performance of OFDMA in FIG. 11 can be explained by the policy of awarding good SCs first to the bad users; this policy minimizes the number of SCs awarded for a given rate target. That is, awarding good SCs to bad users results in few SCs being used by the bad users.

**Claims**

1. A method, comprising:

   obtaining link conditions of a plurality of users at respective user nodes of a point-to-multipoint, P2MP, network that are in communication with a central node of the P2MP network, wherein for each user, the link condition is determined for each subcarrier in a spectrum comprising multiple OFDM subcarriers;
   inputting the link conditions to an entropy loading, EL, algorithm, thereby to determine a modulation format for each of the OFDM subcarriers;
   optimizing an allocation of OFDM subcarriers to users according to an OFDMA scheme; and
   for each user, loading data from a bitstream onto the allocated OFDM subcarriers in the respective determined modulation formats.

2. The method of claim 1, further comprising transmitting the loaded data in parallel, between the user nodes and the central node, on the OFDM subcarriers.

3. The method of claim 2, wherein the transmitted data is transmitted in parallel from the central node to the user nodes.

4. The method of claim 1, wherein the optimizing an allocation of OFDM subcarriers comprises maximizing a data rate.

5. The method of claim 1, wherein the optimizing an allocation of OFDM subcarriers comprises minimizing a bit error rate.

6. The method of claim 1, wherein the P2MP network is a PON, and wherein the loading of the data for each user comprises optical OFDM modulation.

7. The method of claim 1, wherein the optimizing an allocation of OFDM subchannels to users comprises grouping at least some of the subcarriers into one or more SC groups, and allocating each SC group to a respective user.

8. The method of claim 7, wherein the EL algorithm provides, as output, a signal entropy and a net bit rate for each subcarrier under the link condition of each user; and wherein the grouping of subcarriers comprises:

    selecting a user $m$;
    from a set of available subcarriers, sorting the subcarriers in descending order of their net bit rates based on the link condition of user $m$;
    taking subcarriers in the sorted order from highest to lowest rate and binning them until their collective net bit rate reaches or exceeds a bit-rate target for user $m$;
    designating the binned subcarriers as subcarrier group $m$;
    removing the subcarriers of subcarrier group $m$ from the set of available subcarriers; and
    repeating the selecting, sorting, taking, designating, and removing steps for respective new users $m$ until a condition for terminating is reached.

9. The method of claim 8, wherein for each user $m$, the grouping of subcarriers further comprises, after the designating and removing steps:

    evaluating an average bit error rate, BER, for group $m$;
    if the average BER is greater than a target bit rate, adding the next subcarrier in the sorted order to group $m$; and
    returning to the taking step.

10. The method of claim 8, further comprising assigning an order of priority to the users, wherein;

    priority is awarded based on the link condition of each user with highest priority awarded to worst link condition; and
    the users $m$ are selected in the order of priority.

11. The method of claim 10, wherein:

    priority is awarded based on a total achievable data rate for each user; and
    the total achievable data rate for each user is evaluated by summing the subcarrier-dependent net bit rate for that user over all subcarriers in the spectrum.

12. The method of claim 1, further comprising encoding the bitstream with a forward error-correcting code, FEC, before loading data from the bitstream onto the allocated OFDM subcarriers.

13. The method of claim 12, wherein the FEC is a hard decision code, and wherein the optimizing an allocation of OFDM subcarriers to users is performed so as to minimize a bit error rate.

14. The method of claim 12, wherein the FEC is a soft-decision code, and wherein the optimizing an allocation of OFDM subcarriers to users is performed so as to maximize a normalized generalized mutual information ($nGMI$).

15. Apparatus comprising:

    Circuitry configured for obtaining link conditions, in a spectrum comprising multiple OFDM subcarriers, of a plurality of users at respective user nodes of a point-to-multipoint, P2MP, network;
    Circuitry configured for inputting the link conditions to an entropy loading, EL, algorithm and for executing the EL algorithm, thereby to determine a modulation format for each of the OFDM subcarriers;
    circuitry configured for optimizing an allocation of OFDM subcarriers to users according to an OFDMA scheme; and
    circuitry configured for loading data, for each user, from a bitstream onto the allocated OFDM subcarriers in the respective determined modulation formats.

FIG. 1

FIG. 2

FIG. 3

400 — INITIALIZE:
- $S$ = {ALL AVAILABLE SUBCARRIERS}
- COMPARAND FOR FEC THRESHOLD
- BIT-RATE TARGET FOR ALL USERS

401 — PRE-LOAD WITH EL ALGORITHM

402 — SORT SUBCARRIERS IN DESCENDING ORDER BY RATE

FOR EACH USER $M$:

403 — COLLECT SUBCARRIERS INTO GROUP $m$
REMOVE GROUP $m$ FROM $S$

404 — ASSIGN UNIFORM ENTROPY TO GROUP $m$
EVALUATE COMPARAND FOR FEC THRESHOLD

405 — COMPARAND > TARGET?

YES

NO

407 — END

406 — ADD NEXT SUBCARRIER TO GROUP

FIG. 4

500

SET INITIAL RATE TARGET

501

RUN ALGORITHM EL-SCG

502

ARE ANY SUBCARRIERS UNUSED?

YES

NO

504

END

503

INCREASE THE RATE TARGET

FIG. 5

600

SORT USERS IN ASCENDING ORDER BY LINK CONDITION

601

ASSIGN INDICES m=1, m=2, ..., m=M TO USERS IN SORTED ORDER

FIG. 6

FIG. 7

FIG. 8

FIG. 9

FIG. 10

**(b)**

FIG. 11

Europäisches
Patentamt

European
Patent Office

Office européen
des brevets

**EUROPEAN SEARCH REPORT**

**Application Number**

EP 24 15 8687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CHE DI ET AL: "Squeezing out the last few bits from band-limited channels with entropy loading", OPTICS EXPRESS, vol. 27, no. 7, 1 April 2019 (2019-04-01), page 9321, XP055910448, DOI: 10.1364/OE.27.009321 Retrieved from the Internet: URL:https://opg.optica.org/DirectPDFAccess /3025F3CD-3B57-4E62-A73BC7DEBB7CBD0E_40747 5/oe-27-7-9321.pdf?da=1&id=407475&seq=0&mo bile=no> * sections 1, 3, 5 * | 1-15 | INV. H04L5/00 H04B10/25 H04B10/516 H04J14/02 H04L1/00 ADD. H04L27/26 |
| X | IMRE S ET AL: "Fair radio resource allocation in multiuser OFDMA networks", ELECTROTECHNICAL CONFERENCE, 2008. MELECON 2008. THE 14TH IEEE MEDITERRANEAN, IEEE, PISCATAWAY, NJ, USA, 5 May 2008 (2008-05-05), pages 903-908, XP031316471, ISBN: 978-1-4244-1632-5 * page 904 - page 906 * | 1-15 | |
| A | CHEN XI ET AL: "Adaptive Uniform Entropy Loading for SSB-DMT Systems", JOURNAL OF LIGHTWAVE TECHNOLOGY, IEEE, USA, vol. 37, no. 23, 1 December 2019 (2019-12-01), pages 5961-5970, XP011758393, ISSN: 0733-8724, DOI: 10.1109/JLT.2019.2944480 [retrieved on 2019-11-26] * sections II, III * | 1-15 | TECHNICAL FIELDS SEARCHED (IPC) H04L H04B H04J |

-/--

The present search report has been drawn up for all claims

| Place of search | Date of completion of the search | Examiner |
|---|---|---|
| Berlin | 3 July 2024 | Feng, Mei |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 15 8687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUTEMA TILAHUN ZERIHUN ET AL: "WDM Based 10.8 Gbps Visible Light Communication With Probabilistic Shaping", JOURNAL OF LIGHTWAVE TECHNOLOGY, IEEE, USA, vol. 40, no. 15, 18 May 2022 (2022-05-18), pages 5062-5069, XP011915617, ISSN: 0733-8724, DOI: 10.1109/JLT.2022.3175575 [retrieved on 2022-05-19] * page 5063 - page 5064 * | 1-15 | |
| X,P | CHE D. ET AL: "Maximizing flexibility and coverage of a 400G point-to-multi-point IM-DD system by simplified OFDMA entropy loading with subcarrier grouping per-user basis", 49TH EUROPEAN CONFERENCE ON OPTICAL COMMUNICATIONS (ECOC 2023), 1 October 2023 (2023-10-01), - 5 October 2023 (2023-10-05), pages 1-4, XP093181086, DOI: 10.1049/icp.2023.2066 Retrieved from the Internet: URL:https://ieeexplore.ieee.org/stampPDF/g etPDF.jsp?tp=&arnumber=10484630&ref=aHR0cH M6Ly9pZWVleHBsb3JlLmllZWUub3JnL2Fic3RyYWN0 L2RvY3VtZW50LzEwNDg0NjMw> * the whole document * | 1-15 | TECHNICAL FIELDS SEARCHED (IPC) |

The present search report has been drawn up for all claims

| Place of search | Date of completion of the search | Examiner |
|---|---|---|
| Berlin | 3 July 2024 | Feng, Mei |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LINDEN et al.** Increasing flexibility and capacity in real PON deployments by using 2/4/8-PAM formats. *Journal of Optical Communications and Networking,* 2017, vol. 9 (1), A1-A8
- **D. CHE et al.** Approaching the capacity of colored-SNR optical channels by multicarrier entropy loading. *J. Lightwave Technol.,* 2018, vol. 36 (1), 68-78
- **Z. LIU et al.** Linear constellation precoding for OFDM with maximum multipath diversity and coding gains. *IEEE Transactions on Communications,* 2003, vol. 51 (3), 416-427
- **R. BORKOWSKI et al.** FLCS- PON-an opportunistic 100 Gbit/s flexible PON prototype with probabilistic shaping and soft-input FEC: operator trial and ODN case studies. *Journal of Optical Communications and Networking,* 2022, vol. 14 (6), C82-C91
- **D. CHE et al.** Squeezing out the last few bits from band-limited channels with entropy loading. *Optics Express,* 2019, vol. 27 (7), 9321-9329